# EUROPEAN PATENT APPLICATION

(11) **EP 2 128 347 A2**
(43) Date of publication of application: **02.12.2009**
(21) Application number: 09425140.2
(22) Date of filing: 15.04.2009
(51) Int. Cl.: E03B 3/12

(54) **System for extracting water from sandy or gravelly soils**

(30) Priority: 28.05.2008 IT BS20080109
(71) Applicant: Nuovenergie S.r.l., 20122 Milano (IT)
(72) Inventor: Favalli, Alberto, 20122 Milano (IT)
(74) Representative: Sangiacomo, Fulvia

(57) **Abstract**

A system for extracting water from sandy or gravelly soils, in particular near the sea. It comprises in combination: a pipe or probe to be driven deep into the soil and having at least a filtering portion; a settling tank in communication with the top of said tube or probe and connected to the suction side of said pump. The whole so that the pump sucks in the water from the soil through the tube or probe, the tank and the filter and that the water undergoes an initial filtering process on the part of the sandy soil around the pipe or probe, at least a decantation operation in the tank and at least a second filtering operation carried out by the micro porous filter in said tank.

## Description

### Field of the Invention

This invention relates to a system for extracting water from the soil, in particular from sandy or gravelly areas near the sea.

### State of the Technique

The exploitation of artesian basins is carried out by small diameter tubular wells, each one made by driving a column of tubes into the ground by means of which the underground water arrives directly to the surface under its own pressure, without the need for mechanical systems. However this way of making the water flow from the ground appears to be problematic or at least difficult to carry out if applied in areas which although rich in water are however sandy or gravelly.

### Objectives of the Invention

One objective of this invention is to resolve such a problem efficiently, and meet it by proposing a system which, by exploiting the technique of driven tube tubular wells, enables the profitable extraction of water from sandy and gravelly areas in general and in particular when near the sea, in a simple and inexpensive way.

Another objective of the invention is to provide a system which is easy to install, provided also with means in order to function autonomously and able to separate and treat at least a part of the waste water, desalted for its conditioning.

Said objectives are achieved, in agreement with the invention with a system for extracting water from sandy or gravelly areas, in particular those near the sea according to claim 1 in the appendix.

### Brief Description of the Drawings

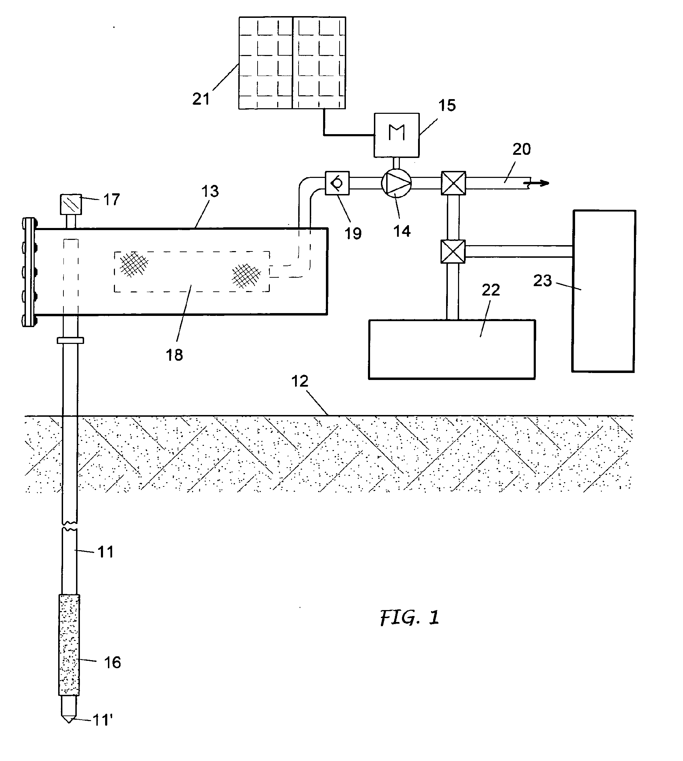

Greater details of the invention will however become evident in the continuation of the description made in reference to the attached illustrative and non-limiting drawing, in which the sole figure schematically illustrates the system proposed herein.

### Detailed Description of the Invention

As shown, the system comprises at least one tube or probe 11 that is driven into a sandy or gravelly soil 12 to a required depth and which is connected at the top to a settling tank 13, and by means of this to a self-priming pump 14 powered by a respective electric motor 15.

The tube or probe 11 made of metal, has a pointed terminal part 11' to facilitate driving it into the ground and is provide with at least at its bottom end, with a filtering portion 16 that allows the water but not the solid particles to enter the tube.

The settling tank 13, preferably positioned and supported horizontally, is closed, in a hollow and provided with a valve 17 in order to allow depressurization according to needs.

It is equipped with a door or a removable head flange in order to gain access to the inside to clean it or provide maintenance.

Internally it is quipped with at least one micro porous type filter 18, connected to the suction side of the pump 14 with the interposition of a non-return valve 19. On its delivery side, the pump 14 is connected to a tube 20 to pipe the water from the tank towards the place where it will be used.

It should also be noted that the system can be set up to function autonomously. In fact in this case the system can, for example, be integrated with at least one photovoltaic module 21 for the production of electric energy to power the pump and any other possible auxiliary components.

Furthermore, the system may without doubt be implemented with treatment means for the conditioning of the desalted waste water; means consisting in cyclonic filter devices and ultraviolet rays 22. It is also possible to foresee the involvement of a part of the waste water in treatment systems 23 for its conditioning through reverse osmosis.

Fundamentally, according to the system of the invention, the water is that drawn forcedly from the sandy or gravelly soil through a tube or probe 11 by means of the suction pump 14, undergoes initial filtering already by the sandy ground which tends to compact around the tube or probe at a certain depth caused by the intake of the pump which is carried out on a level with the filtering portion 16, and is then subjected to conditioning by decantation plus a further filtering action on the part of the micro porous filter 18 in the settling tank 12.

It follows that the proposed system has considerable advantages for sandy soils near the sea in that it enables limpid water with a reduced salt content to be extracted and used. In fact from the analysis of the waste water, the drop in the amount of salt chloride contained in the seawater near the system installation area has been found to be 90% lower.

Indicatively, with the installation of the system in a sandy soil at about 20 metres from the sea, the water extracted was found to have a salinity of about 5.4%. In tests then carried out between 40 and 180 m from the sea, using a three metre deep pipe or probe, the water was found to have an even lower salinity of about 3.6 %.

Furthermore, and as stated previously, the water extracted from the soil following desalting by filtering through the ground and by the filter in the tank it can be purified even more and also treated in different ways for its conditioning.

## Claims

1. A system for extracting water from sandy or gravelly soils, in particular near the sea, comprising in combination: a pipe or probe to be driven deep into the soil and having at least a filtering portion; a settling tank in communication, on one side, with the top of said tube or probe and connected on the other side to a self-priming suction pump; and at least one micro porous filter placed in said settling tank in connection with the suction side of said pump, so that the pump sucks in the water from the soil through the tube or probe, the tank and the filter of said tank and that the water undergoes an initial filtering process on the part of the sandy soil which tends to compact around the pipe or probe, at least a decantation operation in the tank and a second filtering action carried out by the micro porous filter in said tank.

2. The system according to claim 1, wherein the pump is powered by an electric motor connected and fed electrically with at least one photovoltaic module to provide an autonomous functioning system.

3. The system according to claims 1 and 2, wherein the tank is closed and depressurised, preferably positioned horizontally, equipped with a depressurization valve and a non-return valve on its connection to the suction side of the pump.

4. The system according to any of the previous claims, wherein said pump has a delivery side connected to a delivery conduit towards a user unit.

5. The system according to claim 4, wherein the water is piped, all or in part, by said pump, towards the conditioning means consisting in a cyclonic filter device and ultraviolet rays or a reverse osmosis system.
